# EUROPEAN PATENT APPLICATION

(11) **EP 3 156 872 A1**
(43) Date of publication of application: **19.04.2017**
(21) Application number: 15189619.8
(22) Date of filing: 13.10.2015
(51) Int. Cl.: G05D 1/02

(54) **VACUUM CLEANING ROBOT WITH VISUAL NAVIGATION AND NAVIGATION METHOD THEREOF**

(71) Applicant: Looq Systems Inc, Santa Clara, CA 95054 (US)
(72) Inventor: HU, Zhihao, Santa Clara, CA95054 (US); CHEN, Yongtao, Santa Clara, CA95054 (US)
(74) Representative: Regimbeau

(57) **Abstract**

The present invention provides a vacuum cleaning robot with vision navigation function and navigation method thereof. The vacuum cleaning robot comprises a cleaning body and a vision navigation controller. The cleaning body comprises a sense unit, a drive unit, and a drive control unit. The vision navigation controller comprises a vision capture unit, a storage unit, and a path navigation control unit. The vision capture unit is configured to capture the related vision information, and the related vision information constitutes the map information comprising a partial map and a global map of the current room; the path navigation control unit is configured to generate a path navigation instruction according to the vision information, the map information, and the sense information; and the drive control unit is configured to control the drive unit according to the path navigation instruction.

## Description

### Field of the Invention

The present invention relates to vacuum cleaning robot field, and in particular relates to a vacuum cleaning robot with vision navigation function and navigation method thereof.

### Background of the Invention

With the development of the smart home, vacuum cleaning robot is getting more and more attention. The existing vacuum cleaning robot can utilize infrared sensors and cameras to perform vision navigation, but its high price is unacceptable to users. Therefore, there is a need for a novel vacuum cleaning robot with vision navigation function and navigation method thereof, which can achieve vision navigation and path planning function by simply modifying an ordinary vacuum cleaning robot without camera.

### Summary of the Invention

The technical problem that the present invention solves is to provide a vacuum cleaning robot with vision navigation function and navigation method thereof, aiming to provide vision navigation and path planning function of the vacuum cleaning robot in an economical and convenient way.

The present invention provides a vacuum cleaning robot with vision navigation function, comprising a cleaning body and a vision navigation controller coupled to the cleaning body. The cleaning body comprises a sense unit, a drive unit, and a drive control unit, and the vision navigation controller comprises a vision capture unit, a storage unit, and a path navigation control unit, wherein the vision capture unit is configured to capture the related vision information of the vacuum cleaning robot, and the related vision information constitutes the map information comprising the partial map and the global map of the current room of the vacuum cleaning robot; the storage unit coupled to the vision capture unit is configured to store the map information; the path navigation control unit coupled to the vision capture unit, the storage unit, and the drive control unit is configured to obtain the related sense information from the sense unit via the drive control unit, and to make path navigation instruction according to the vision information, the map information, and the sense information; and the drive control unit coupled to the path navigation control unit is configured to receive the path navigation instruction, and to control the motion direction of the drive unit according to the path navigation instruction.

Furthermore, the vacuum cleaning robot with vision navigation function further comprises: a vision capture accessory coupled to the vision capture unit, wherein the vision navigation controller is mounted on the top of the cleaning body and the vision capture accessory is mounted on the top of the vision navigation controller, and wherein the vision capture accessory is configured to reflect the vision information in front of the vision capture accessory into the vision capture unit.

Furthermore, the vision capture accessory and the vision capture unit are fixed in a magnetic form.

Furthermore, the vision capture accessory and the vision capture unit are fixed in a slot way.

Furthermore, the vision capture accessory and/or the vision capture unit are rotatable, so that the vacuum cleaning robot obtains a slope-upward view angle.

Furthermore, the vision capture accessory and/or the vision capture unit further include a lighting unit so that the vacuum cleaning robot works in dark situation.

Furthermore, the path navigation control unit is configured to perform object detection, object track, and man-machine distance estimation, and to perform object position and navigation path planning according to the vision information, the map information, and the sense information.

Furthermore, the path navigation control unit is configured to utilize mean shift algorithm based on Kalman prediction to perform object detection, object track, man-machine distance estimation, object position, and navigation path planning.

The present invention also provides a navigation method performed by a vacuum cleaning robot with vision navigation function, comprising: capturing the related vision information of the vacuum cleaning robot, by a vision capture unit, and the related vision information constitutes the map information comprising the partial map and the global map of the current room of the vacuum cleaning robot; storing the map information store in a storage unit; obtaining the related sense information from a sense unit, by a path navigation control unit; making path navigation instruction, by the path navigation control unit, according to the vision information, the map information, and the sense information; and receiving the path navigation instruction by a drive control unit, and controlling the motion direction of the drive unit according to the path navigation instruction.

Furthermore, the step of the path navigation control unit making path navigation instruction according to the vision information, the map information, and the sense information comprises: the path navigation control unit performs object detection, object track, and man-machine distance estimation, and performs object position and navigation path planning according to the vision information, the map information, and the sense information.

Compared to the prior art, the benefits of the present invention are: the embodiment of the present invention provides a vacuum cleaning robot with vision navigation function and navigation method thereof, which can achieve vision navigation and path planning function by simply modifying an ordinary vacuum cleaning robot without camera. Additionally, users can watch the horizontal view angle of the vacuum cleaning robot by using the camera of the vacuum cleaning robot and App software installed on the mobile phone, so as to easily find the things lost under the bed (find object scene), or observe the movement of children or old men to keep them safe (home care scene).

### Brief Description of the Drawings

Fig. 1 is an appearance diagram of a vacuum cleaning robot with vision navigation function according to one embodiment of the present invention.
Fig. 2 is an appearance diagram of a vacuum cleaning robot with vision navigation function according to another embodiment of the present invention.
Fig. 3 is a block diagram of a vacuum cleaning robot with vision navigation function according to one embodiment of the present invention.
Fig. 4 is a flowchart of a navigation method performed by a vacuum cleaning robot with vision navigation function according to one embodiment of the present invention.

### Detailed Description of the Embodiments

To clarify the technical problem solved by the present invention, technical scheme and its beneficial effects, the present invention is further described in details in conjunction with the accompanying drawings and embodiments. It should be understood that the specific embodiment described here is merely used to explain general principles of the invention, instead of limiting the scope of the invention.

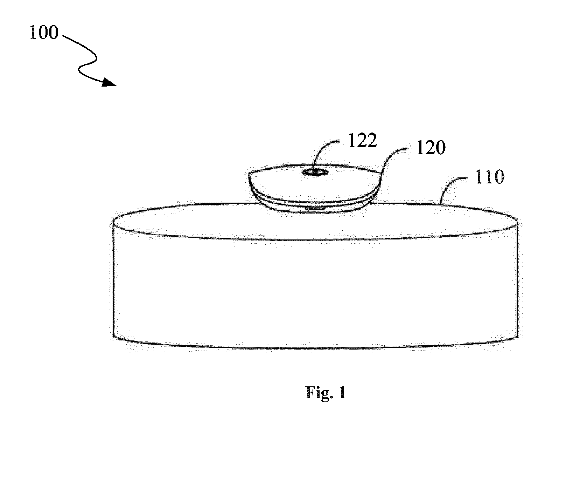

Fig. 1 is an appearance diagram of a vacuum cleaning robot 100 with vision navigation function according to one embodiment of the present invention. As shown in Fig. 1, the vacuum cleaning robot 100 with vision navigation function comprises: a cleaning body 110 and a vision navigation controller 120. In one embodiment, the cleaning body 110 can be an ordinary vacuum cleaning robot without camera, and its internal components can include: a sense unit (e.g., multiple sensors comprising gyroscopes and infrared sensors, etc), a drive control unit (e.g., micro controller MCU), a drive unit (e.g., drive wheels with drive motors), a vacuum unit (e.g., dust brush and dust collecting box), and a power unit (e.g., battery). The drive control unit controls the motion direction of the drive unit (e.g., back, forth, left, right, and pause), and also controls the motion direction of the control vacuum cleaning robot 100.

The vision navigation controller 120 can be mounted on the top of the cleaning body 110 in wired or wireless way. The vision navigation controller 120 can comprise a switch 122 of the vision navigation controller 120 and a vision capture unit (e.g., a built-in camera, not shown). Especially, the vision capture unit can be mounted on the top of the vision navigation controller 120, used to capture the related vision information (e.g., the vision image directly above) of the vacuum cleaning robot 100, and the related vision information is utilized to constitute the map information comprising the partial map and the global map of the current room (e.g., room length and width, information on feature points, information on barrier locations, etc). The vision navigation controller 120 further obtains the related sense information (e.g., the distance and size of barriers ahead) from the sense unit in the cleaning body 110, and makes path navigation instruction according to the above-mentioned vision information, map information, and sense information. The cleaning body 110 receives the path navigation instruction, and the drive control unit (e.g., micro controller MCU) in the cleaning body 110 controls the motion direction of the drive unit (e.g., drive wheels with drive motors) according to the path navigation instruction. Please note that, though in Fig. 1, the vision navigation controller 120 is mounted on the top of the cleaning body 110 in wired or wireless way, in other embodiments, the vision navigation controller 120 can be coupled to the cleaning body 110 in other ways, which is not the limitation of the present invention.

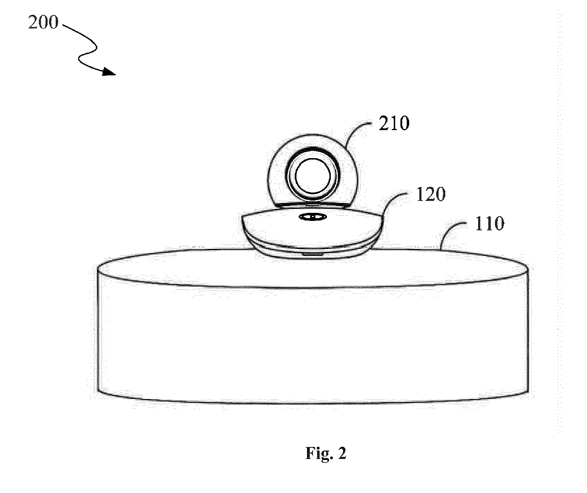

However, the vision capture unit in Fig. 1 can only capture the related vision information directly above the vacuum cleaning robot 100. In some application scenes, users may want to watch the horizontal view angle of the vacuum cleaning robot by using the camera of the vacuum cleaning robot and App software installed on the mobile phone. In this way, users can easily find the things lost under the bed (find object scene), or observe the movement of children or old men to keep them safe (home care scene). Therefore, users can selectively mount a vision capture accessory (e.g., the vision capture accessory 210 in Fig. 2) on the top of the vision navigation controller 120. Please note that, though in Fig. 2, the vision navigation controller 120 is mounted on the top of the cleaning body 110 and the vision capture accessory 210 is mounted on the top of the vision navigation controller 120, in other embodiments, the vision capture accessory 210 can be coupled to the cleaning body 110 in other ways, which is not the limitation of the present invention.

Fig. 2 is an appearance diagram of a vacuum cleaning robot 200 with vision navigation function according to another embodiment of the present invention. The vacuum cleaning robot 200 in Fig. 2 is basically the same with the vacuum cleaning robot 100 in Fig. 1, except that the vacuum cleaning robot 200 further includes a vision capture accessory 210. In one embodiment, the principle of the vision capture accessory 210 is similar to the periscope, which includes a reflecting mirror to reflect vision information in front of the vision capture accessory 210 (horizontal view angle) into the vision capture unit of the vision navigation controller 120 (vertical view angle). In one example, the vision capture accessory 210 and the vision capture unit utilize (not shown) are fixed in a magnetic form, both interfaces have magnetic substance so that they can be connected firmly with magnetic force. In another example, the vision capture accessory 210 and the vision capture unit (not shown) are fixed in a slot way, both interfaces have matched slot and hook.

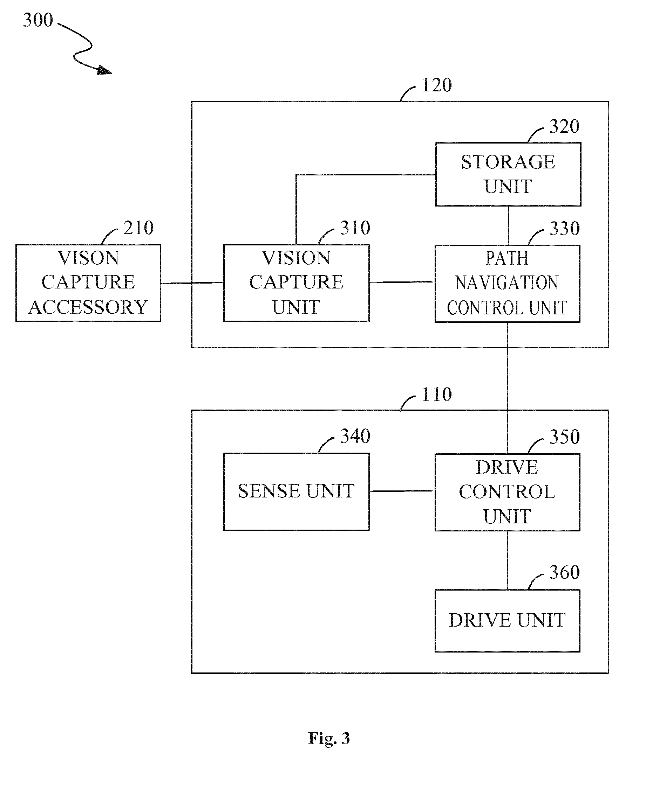

Fig. 3 is a block diagram of a vacuum cleaning robot 300 with vision navigation function according to one embodiment of the present invention. One skilled in the art can understand Fig. 3 in combination with the description of Fig. 1 and Fig. 2. As shown in Fig. 3, the vacuum cleaning robot 300 comprises the cleaning body 110, the vision navigation controller 120, and the optional vision capture accessory 210. The function of the vision capture accessory 210 can refer to the description of Fig. 2, so that the repetitious details are omitted for simplicity.

In one embodiment, the cleaning body 110 can be an ordinary vacuum cleaning robot without camera, and its internal components can include: a sense unit 340 (e.g., multiple sensors comprising gyroscopes and infrared sensors, etc), a drive control unit 350 (e.g., micro controller MCU), a drive unit 360 (e.g., drive wheels with drive motors), a vacuum unit (e.g., dust brush and dust collecting box, not shown), and a power unit (e.g., battery, not shown). The drive control unit 350 controls the motion direction of the drive unit 360 (e.g., back, forth, left, right, and pause), and also controls the motion direction of the control vacuum cleaning robot 300.

The vision navigation controller 120 can be mounted on the top of the cleaning body 110 in wired or wireless way. The vision navigation controller 120 can comprise a vision capture unit 310 (e.g., a built-in camera, not shown), a storage unit 320 (e.g., memory), and a path navigation control unit 330. Especially, the vision capture unit 310 can be mounted on the top of the vision navigation controller 120, used to capture the related vision information (e.g., the vision image directly above) of the vacuum cleaning robot 100. In one example, the vision capture unit 310 can work with the vision capture accessory 210, which means that the vision capture unit 310 and the vision capture accessory 210 obtain the related vision information together. The related vision information constitutes the map information comprising the partial map and the global map of the current room (e.g., room length and width, information on feature points, information on barrier locations, etc). The map information can be stored in the storage unit 320. The path navigation control unit 330 is coupled to the vision capture unit 310 and the storage unit 320. The path navigation control unit 330 further obtains the related sense information (e.g., the distance and size of barriers ahead) from the sense unit 340 via the drive control unit 350 in the cleaning body 110, and makes path navigation instruction according to the above-mentioned vision information, map information, and sense information. The cleaning body 110 receives the path navigation instruction, and the drive control unit 350 (e.g., micro controller MCU) in the cleaning body 110 controls the motion direction of the drive unit 360 (e.g., drive wheels with drive motors) according to the path navigation instruction.

In particular, e.g., in home care scene, the vacuum cleaning robot 300 needs to walk by tracking the specific object (e.g., children or old men), and moves with the motion of the specific object. In one preferred embodiment, to make the vacuum cleaning robot 300 have a wider view angle, users can rotate the vision capture unit 310 and/or the vision capture accessory 210 by a certain degree (e.g., slope-upward 45 degree), so that the vacuum cleaning robot 300 can obtain a slope-upward view angle instead of a horizontal view angle. In another preferred embodiment, the vision capture unit 310 and/or the vision capture accessory 210 can further include a lighting unit (e.g., LED array) so that the vacuum cleaning robot 300 can see the current room and work normally, even in dark situation. After the vacuum cleaning robot 300 obtains the related vision information (partial map) of the current view angle through the vision capture unit 310 and the vision capture accessory 210, the path navigation control unit 330 can perform object detection (e.g., detection of specific object), object track, and man-machine distance estimation, and then perform object position and corresponding navigation path planning. In one preferred embodiment, the operations of object detection, object track, and man-machine distance estimation can utilize mean shift algorithm based on Kalman prediction to perform image processing and corresponding vision navigation (back, forth, left, right, and pause), but this is not the limitation of the present invention. On the contrary, one skilled in the art can use other similar algorithms to achieve the same or similar image processing.

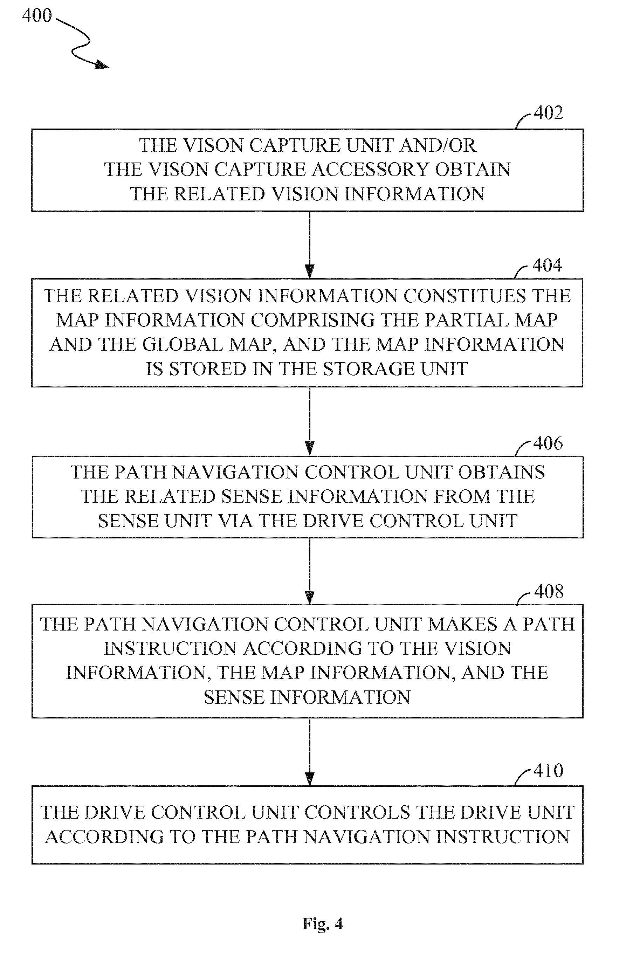

Fig. 4 is a flowchart of a navigation method 400 performed by a vacuum cleaning robot with vision navigation function according to one embodiment of the present invention. One skilled in the art can understand Fig. 4 in combination with the description of Fig. 1 to Fig. 3. As shown in Fig. 4, the navigation method 400 includes below steps:

Step 402: The vision capture unit and/or the vision capture accessory obtain the related vision information. In particular, the vision capture unit 310 can be mounted on the top of the vision navigation controller 120, used to capture the related vision information (e.g., the vision image directly above) of the vacuum cleaning robot 100. The principle of the vision capture accessory 210 is similar to the periscope, which includes a reflecting mirror to reflect vision information in front of the vision capture accessory 210 (horizontal view angle) into the vision capture unit of the vision navigation controller 120 (vertical view angle). In one example, the vision capture accessory 210 and the vision capture unit utilize (not shown) are fixed in a magnetic form, both interfaces have magnetic substance so that they can be connected firmly with magnetic force. In another example, the vision capture accessory 210 and the vision capture unit (not shown) are fixed in a slot way, both interfaces have matched slot and hook.

Step 404: The related vision information constitutes the map information comprising the partial map and the global map of the current room, and the map information is stored in the storage unit. In particular, the related vision information constitutes the map information comprising the partial map and the global map of the current room (e.g., room length and width, information on feature points, information on barrier locations, etc), and the map information can be stored in the storage unit 320.

Step 406: The path navigation control unit obtains the related sense information from the sense unit via the drive control unit in the cleaning body. In particular, the path navigation control unit 330 obtains the related sense information (e.g., the distance and size of barriers ahead) from the sense unit 340 via the drive control unit 350 in the cleaning body 110.

Step 408: The path navigation control unit makes path navigation instruction according to the above-mentioned vision information, map information, and sense information. In particular, e.g., in home care scene, the vacuum cleaning robot 300 needs to walk by tracking the specific object (e.g., children or old men), and moves with the motion of the specific object. In one preferred embodiment, to make the vacuum cleaning robot 300 have a wider view angle, users can rotate the vision capture unit 310 and/or the vision capture accessory 210 by a certain degree (e.g., slope-upward 45 degree), so that the vacuum cleaning robot 300 can obtain a slope-upward view angle instead of a horizontal view angle. In another preferred embodiment, the vision capture unit 310 and/or the vision capture accessory 210 can further include a lighting unit (e.g., LED array) so that the vacuum cleaning robot 300 can see the current room and work normally, even in dark situation. After the vacuum cleaning robot 300 obtains the related vision information (partial map) of the current view angle through the vision capture unit 310 and the vision capture accessory 210, the path navigation control unit 330 can perform object detection (e.g., detection of specific object), object track, and man-machine distance estimation, and then perform object position and corresponding navigation path planning. In one preferred embodiment, the operations of object detection, object track, and man-machine distance estimation can utilize mean shift algorithm based on Kalman prediction to perform image processing and corresponding vision navigation (back, forth, left, right, and pause), but this is not the limitation of the present invention. On the contrary, one skilled in the art can use other similar algorithms to achieve the same or similar image processing.

Step 410: The drive control unit controls the motion direction of the drive unit according to the path navigation instruction. In particular, the drive control unit 350 in the cleaning body 110 receives the path navigation instruction, and controls the motion direction of the drive unit 360 (e.g., drive wheels with drive motors) according to the path navigation instruction.

Advantageously, the embodiment of the present invention provides a vacuum cleaning robot with vision navigation function and navigation method thereof, which can achieve vision navigation and path planning function by simply modifying an ordinary vacuum cleaning robot without camera. Additionally, users can watch the horizontal view angle of the vacuum cleaning robot by using the camera of the vacuum cleaning robot and App software installed on the mobile phone, so as to easily find the things lost under the bed (find object scene), or observe the movement of children or old men to keep them safe (home care scene).

The foregoing is only the preferred embodiment of the present invention, instead of limiting the present invention. Any alterations, equivalent replacements, and improvements, as long as not departing from the spirit and scope of the invention, should be within the protection scope of the invention.

## Claims

1. A vacuum cleaning robot with vision navigation function, comprising a cleaning body and a vision navigation controller coupled to the cleaning body, wherein the cleaning body comprises a sense unit, a drive unit, and a drive control unit, and the vision navigation controller comprises a vision capture unit, a storage unit, and a path navigation control unit,
wherein the vision capture unit is configured to capture the related vision information of the vacuum cleaning robot, and the related vision information constitutes the map information comprising the partial map and the global map of the current room of the vacuum cleaning robot;
the storage unit coupled to the vision capture unit is configured to store the map information;
the path navigation control unit coupled to the vision capture unit, the storage unit, and the drive control unit is configured to obtain the related sense information from the sense unit via the drive control unit, and to make path navigation instruction according to the vision information, the map information, and the sense information; and
the drive control unit coupled to the path navigation control unit is configured to receive the path navigation instruction, and to control the motion direction of the drive unit according to the path navigation instruction.

2. The vacuum cleaning robot of claim 1, further comprising:
a vision capture accessory coupled to the vision capture unit, wherein the vision navigation controller is mounted on the top of the cleaning body and the vision capture accessory is mounted on the top of the vision navigation controller, and wherein the vision capture accessory is configured to reflect the vision information in front of the vision capture accessory into the vision capture unit.

3. The vacuum cleaning robot of claim 2, wherein the vision capture accessory and the vision capture unit are fixed in a magnetic form.

4. The vacuum cleaning robot of claim 2, wherein the vision capture accessory and the vision capture unit are fixed in a slot way.

5. The vacuum cleaning robot of claim 2, wherein the vision capture accessory and/or the vision capture unit are rotatable, so that the vacuum cleaning robot obtains a slope-upward view angle.

6. The vacuum cleaning robot of claim 2, wherein the vision capture accessory and/or the vision capture unit further include a lighting unit so that the vacuum cleaning robot works in dark situation.

7. The vacuum cleaning robot of claim 1, wherein the path navigation control unit is configured to perform object detection, object track, and man-machine distance estimation, and to perform object position and navigation path planning according to the vision information, the map information, and the sense information.

8. The vacuum cleaning robot of claim 7, wherein the path navigation control unit is configured to utilize mean shift algorithm based on Kalman prediction to perform object detection, object track, man-machine distance estimation, object position, and navigation path planning.

9. A navigation method performed by a vacuum cleaning robot with vision navigation function, comprising:
capturing the related vision information of the vacuum cleaning robot, by a vision capture unit, and the related vision information constitutes the map information comprising the partial map and the global map of the current room of the vacuum cleaning robot;
storing the map information store in a storage unit;
obtaining the related sense information from a sense unit, by a path navigation control unit;
making path navigation instruction, by the path navigation control unit, according to the vision information, the map information, and the sense information; and
receiving the path navigation instruction by a drive control unit, and controlling the motion direction of the drive unit according to the path navigation instruction.

10. The navigation method of claim 9, wherein the step of the path navigation control unit making path navigation instruction according to the vision information, the map information, and the sense information comprises: the path navigation control unit performs object detection, object track, and man-machine distance estimation, and performs object position and navigation path planning according to the vision information, the map information, and the sense information.
